# EUROPÄISCHE PATENTSCHRIFT

(11) **EP 3 055 952 B1**
(45) Veröffentlichungstag und Bekanntmachung des Hinweises auf die Patenterteilung: **06.06.2018**
(21) Anmeldenummer: 14783811.4
(22) Anmeldetag: 09.10.2014
(51) Int. Cl.: H04L 12/40, H04L 25/03

(54) **TEILNEHMERSTATION FÜR EIN BUSSYSTEM UND VERFAHREN ZUR BREITBANDIGEN CAN-KOMMUNIKATION**
SUBSCRIBER STATION FOR A BUS SYSTEM, AND METHOD FOR WIDEBAND CAN COMMUNICATION
POSTE DE RÉSEAU POUR SYSTÈME DE BUS ET PROCÉDÉ DE COMMUNICATION PAR RÉSEAU CAN À LARGE BANDE

(30) Priorität: 09.10.2013 DE 102013220374
(43) Veröffentlichungstag der Anmeldung: 17.08.2016
(73) Patentinhaber: Robert Bosch GmbH, 70442 Stuttgart (DE)
(72) Erfinder: NICKEL, Patrick, 63633 Birstein (DE)
(86) Internationale Anmeldenummer: PCT/EP2014/071696
(87) Internationale Veröffentlichungsnummer: WO 2015/052296

(56) Entgegenhaltungen:
- WO-A2-99/46886
- CN-A- 102 821 080
- DE-A1-102011 007 846
- US-A1- 2012 269 253

## Beschreibung

### Technisches Gebiet

Die vorliegende Erfindung betrifft eine Teilnehmerstation für ein Bussystem und ein Verfahren zur breitbandigen CAN-Kommunikation, bei welchen eine Kommunikation in einem CAN Bussystem für höhere Geschwindigkeiten über CAN-FD hinaus möglich ist.

### Stand der Technik

Automobile Bussysteme entwickeln sich kontinuierlich zu höheren Bandbreiten, niedrigeren Latenzzeiten und strengerer Echtzeitfähigkeit. Für die Kommunikation zwischen Sensoren und Steuergeräten hat das CAN-Bussystem eine weite Verbreitung gefunden. Beim CAN-Bussystem werden Nachrichten mittels des CAN-Protokolls übertragen, wie es in der CAN-Spezifikation in der ISO11898 beschrieben ist. In jüngerer Zeit wurden hierfür zudem Techniken vorgeschlagen, wie beispielsweise CAN-FD, bei welchem Nachrichten entsprechend Spezifikation "CAN with Flexible Data-Rate,
Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert.

Die Erweiterung des CAN-Standards wurde neben vorrangig funktionalen Ergänzungen, wie beispielsweis TTCAN (Time Triggered CAN = zeitgetriggerter CAN), in jüngster Zeit mit CAN-FD besonders hinsichtlich der möglichen (höheren) Datenrate und der nutzbaren Datenpaketgröße erweitert, wobei die ureigenen CAN-Eigenschaften besonders in Form der Arbitrierung erhalten wurden. Weiterhin wurde die Signaldarstellung im Datenteil im Wesentlichen durch eine höhere Schaltfrequenz der Signalzustände (high/low = hoch/niedrig) geändert.

DE 10 2009 026 961 A1 beschreibt ein Verfahren zum Übertragen von Daten zwischen Teilnehmerstationen eines Bussystems, bei welchem eine Erweiterung des existierenden CAN-Signals und der zugehörigen Kommunikationseinrichtung hinsichtlich der Nutzung hochfrequenter Signale offenbart ist, welche in beliebiger Form (zeitlich parallel oder eingebettet) zu einem CAN-Datenstrom auf die Leitung aufgeprägt werden. Hierbei wird besonders eine Abstimmung des Signals (Synchronisation, Trigger) mit dem CAN-Signal vorgeschlagen.

DE 10 2011 007 846 A1 offenbart ein Datenübertragungsverfahren, bei dem mit Signalen einzelne Datenrahmen als eine Folge modulierter Symbole übertragen werden, und bei dem die empfangenen Signale mit einem Entzerrer entzerrt werden, wobei der Entzerrer die empfangenen Signale abtastet und eine Adaption des Entzerrers gesteuert durch ein Protokoll nur in bestimmten Zeitintervallen erfolgt.

Derzeit wird überlegt, für automobile Bussysteme auch höhere Geschwindigkeiten über CAN-FD hinaus zu ermöglichen, insbesondere in einem Bereich von 5 bis 100 MBit/s. Hierbei soll es jedoch auch möglich sein, die für die höheren Geschwindigkeiten ausgelegten Teilnehmerstationen in gemischten Netzwerken mit bestehenden CAN-Teilnehmerstationen oder CAN-Knoten betreiben zu können. Problematisch ist hierbei, falls dadurch bei den CAN-Teilnehmerstationen des Bussystems eine Anpassung der Anwendungssoftware an das Netzwerk mit höheren Geschwindigkeiten erforderlich werden sollte, da eine Anpassung der Anwendungssoftware meist aufwändig und dadurch kostenintensiv ist.

### Offenbarung der Erfindung

Daher ist es Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, welche eine Weiterentwicklung der CAN-Signalstrukturen und notwendigen Kommunikationseinrichtungen zu höheren Datenraten auch ohne Softwareanpassung, insbesondere für die Anwendung bzw. Applikation, bieten.

Die Aufgabe wird durch eine Teilnehmerstation für ein Bussystem mit den Merkmalen des Anspruchs 1 gelöst. Die Teilnehmerstation umfasst eine Pulsformungseinrichtung zur Pulsformung einer Nachricht derart, dass die Nachricht eine Trainingssequenz umfasst, welche Informationen zur Bestimmung der Kanalcharakteristik zwischen der Teilnehmerstation und einer weiteren Teilnehmerstation des Bussystems umfasst, an welche die Nachricht zu senden ist, und/oder eine Korrektureinrichtung zur Korrektur eines von der Teilnehmerstation empfangenen Signals auf der Grundlage einer Trainingssequenz, welche in einer von einer Pulsformungseinrichtung der weiteren Teilnehmerstation geformten Nachricht umfasst ist.

Mit der Teilnehmerstation wird eine Nutzung von neuartigen Kommunikationsformaten im mittleren Segment des CAN-Rahmens möglich. Bei der Kommunikation wird hierfür insbesondere kein zusätzliches System parallel betrieben, sondern die eigentliche CAN-Struktur ist in mehreren Ansätzen und Realisierungsvorschlägen für hohe Datenraten weiterentwickelt.

Darüber hinaus ist mit der Teilnehmerstation das CAN Bussystem für höhere Geschwindigkeiten über CAN-FD hinaus so weiterentwickelt, dass wesentliche Anwendungsmerkmale im Einklang zu bestehenden CAN-Prinzipien stehen. Dadurch ist ein Mischbetrieb möglich, bei welchem für die höheren Geschwindigkeiten ausgelegten Teilnehmerstationen in gemischten Netzwerken mit bestehenden CAN-Teilnehmerstationen oder CAN-Knoten betrieben werden.

Die zuvor beschriebene Teilnehmerstation ist je nach Bedarf für den Einsatz auch bei Systemen geeignet, die Datenraten über CAN-FD hinaus verarbeiten können.

Vorteilhafte weitere Ausgestaltungen der Teilnehmerstation sind in den abhängigen Patentansprüchen angegeben.

Es ist möglich, dass die Pulsformungseinrichtung derart ausgestaltet ist, dass sie die Trainingssequenz nach einem Rahmenkopf und vor einem Rahmenende der Nachricht anordnet, wobei der Rahmenkopf und das Rahmenende gemäß dem CAN-Protokoll gebildet sind.

Die Pulsformungseinrichtung kann derart ausgestaltet ist, dass sie die Trainingssequenz am Anfang oder in der Mitte eines Datensegments anordnet, das zwischen dem Rahmenkopf und dem Rahmenende der Nachricht angeordnet ist, und/oder wobei die Pulsformungseinrichtung derart ausgestaltet ist, dass sie die Daten im Datensegment mit einer Bitrate im Bereich von 5 bis 100 MBit/s bildet. Hierbei kann die Pulsformungseinrichtung ferner derart ausgestaltet sein, dass das Datensegment zudem Parameter, Informationsbits und eine Checksumme in dieser Reihenfolge umfasst, wobei die Informationsbits Informationen umfassen, welche von der Teilnehmerstation als Sender an die weitere Teilnehmerstation als Empfänger zu senden sind.

Es ist auch möglich, dass die Korrektureinrichtung zudem zur Korrektur des von der Teilnehmerstation empfangenen Signals gemäß einem DFE-Algorithmus oder einem BCJR-Algorithmus oder einem DDFSE-Algorithmus zur Signalentzerrung ausgestaltet ist.

Möglicherweise umfasst die Korrektureinrichtung einen Analog-/Digital-Wandler, der mit einem herkömmlichen CAN-Transceiver kombiniert ist, und die Pulsformungseinrichtung umfasst einen Digital-/Analog-Wandler mit nachgeschaltetem Schalter zum Einkoppeln von rezessiven Zuständen auf die Busleitung. Zusätzlich oder alternativ kann die Pulsformungseinrichtung einen Pull-Down-Transistor oder einen Transceiver zum Einkoppeln von dominanten Zuständen auf die Busleitung umfassen.

Vorzugsweise umfasst die Teilnehmerstation zudem eine Sende-/Empfangseinrichtung zum direkten Anschluss an eine Busleitung des Bussystems, und eine Kommunikationssteuereinrichtung zum Verarbeiten der von der Sende-/Empfangseinrichtung empfangenen Signale und zum Bereitstellen der von ihr zu sendenden Nachrichten in Form von Signalen, wobei die Pulsformungseinrichtung und/oder die Korrektureinrichtung Teil der Sende-/Empfangseinrichtung oder der Kommunikationssteuereinrichtung sind.

Die zuvor beschriebene Teilnehmerstation kann Teil eines Bussystems sein, das zudem eine Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur breitbandigen CAN-Kommunikation nach Patentanspruch 10 gelöst. Das Verfahren umfasst die Schritte. Pulsformen, mit einer Pulsformungseinrichtung, einer Nachricht derart, dass die Nachricht eine Trainingssequenz umfasst, welche Informationen zur Bestimmung der Kanalcharakteristik zwischen der Teilnehmerstation und einer weiteren Teilnehmerstation des Bussystems umfasst, an welche die Nachricht zu senden ist, und/oder Korrigieren, mit einer Korrektureinrichtung, eines von der Teilnehmerstation empfangenen Signals auf der Grundlage einer Trainingssequenz, welche in einer von einer Pulsformungseinrichtung der weiteren Teilnehmerstation geformten Nachricht umfasst ist.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 bis Fig. 4 eine schematische Darstellung des Aufbaus einer Nachricht, die in dem Bussystems gemäß dem ersten Ausführungsbeispiel übertragen wird;
Fig. 5 ein Blockschaltbild zur Erläuterung der Funktion einer Pulsformungseinrichtung und einer Korrektureinrichtung des Bussystems gemäß dem ersten Ausführungsbeispiel;
Fig. 6 ein Blockschaltbild zur Erläuterung der Funktion einer Pulsformungseinrichtung und einer Korrektureinrichtung des Bussystems gemäß einem zweiten Ausführungsbeispiel; und
Fig. 7 ein Blockschaltbild zur Erläuterung der Funktion einer Pulsformungseinrichtung und einer Korrektureinrichtung des Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

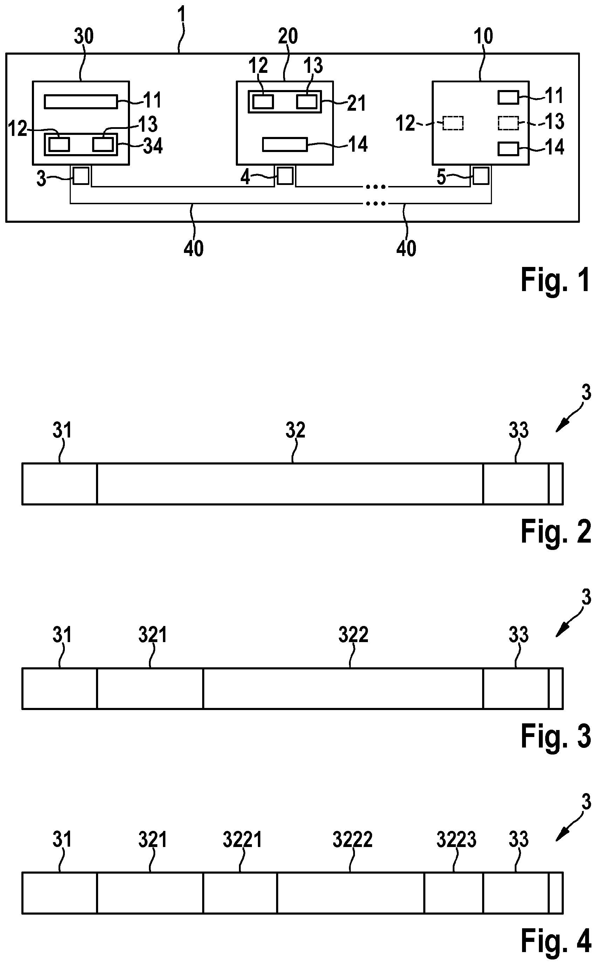

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an eine Busleitung 40 angeschlossen sind. Über die Busleitung 40 können Nachrichten 3, 4, 5 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, hat die Teilnehmerstation 10 eine Kommunikationssteuereinrichtung 11, optional eine Pulsformungseinrichtung 12, optional eine Korrektureinrichtung 13, und eine Sende-/Empfangseinrichtung 14.

Die Teilnehmerstation 20 hat dagegen eine Kommunikationssteuereinrichtung 21, die eine Pulsformungseinrichtung 12 und eine Korrektureinrichtung 13 umfasst, und eine Sende-/Empfangseinrichtung 14. Die Teilnehmerstation 30 hat, wie die Teilnehmerstation 10, eine Kommunikationssteuereinrichtung 11, sowie eine Sende-/Empfangseinrichtung 34, die eine Pulsformungseinrichtung 12 und eine Korrektureinrichtung 13 umfasst. Die Sende-/Empfangseinrichtungen 14, 34 der Teilnehmerstationen 10, 20, 30 sind jeweils direkt an die Busleitung 40 angeschlossen, auch wenn dies in Fig. 1 nicht dargestellt ist.

Wie in Fig. 1 gezeigt, hat jede der Teilnehmerstationen 20, 30 eine Pulsformungseinrichtung 12 und eine Korrektureinrichtung 13. Bei der Teilnehmerstation 10 sind die Pulsformungseinrichtung 12 und die Korrektureinrichtung 13 nicht zwingend vorhanden. Bei der Teilnehmerstation 20 sind die Pulsformungseinrichtung 12 und die Korrektureinrichtung 13 jedoch Teil der Kommunikationssteuereinrichtung 21. Bei der Teilnehmerstation 30 sind die Pulsformungseinrichtung 12 und die Korrektureinrichtung 13 Teil der Sende-/Empfangseinrichtung 34. Die Kommunikationssteuereinrichtung 21 der Teilnehmerstation 20 ist ansonsten gleich der Kommunikationssteuereinrichtung 11 der Teilnehmerstation 10. Zudem ist die Sende-/Empfangseinrichtung 34 der Teilnehmerstation 350 ansonsten gleich der Sende-/Empfangseinrichtung 14 der Teilnehmerstation 10.

Die Kommunikationssteuereinrichtung 11 dient zur Steuerung einer Kommunikation der jeweiligen Teilnehmerstation 10, 20, 30 über die Busleitung 40 mit einer anderen Teilnehmerstation der an die Busleitung 40 angeschlossenen Teilnehmerstationen 10, 20, 30. Die Pulsformungseinrichtung 12 und die Korrektureinrichtung 13 dienen zur Übertragung der Nachrichten 3, 4, 5 mit hoher Datenrate auf der Busleitung 40 mit CAN-Bus-Topologie, wie später noch ausführlicher beschrieben. Die Kommunikationssteuereinrichtung 11 kann wie ein herkömmlicher CAN-Controller ausgeführt sein. Die Sende-/Empfangseinrichtung 14 kann in Bezug auf ihre Sendefunktionalität wie ein herkömmlicher CAN-Transceiver ausgeführt sein. Demzufolge kann mit den beiden Teilnehmerstationen 20, 30 eine Bildung und dann Übertragung von Nachrichten 3, 4 mit höheren Datenraten als CAN-FD realisiert werden. Die Teilnehmerstation 10 entspricht hingegen sowohl in Bezug auf ihre Sende- als auch ihre Empfangsfunktionalität einer herkömmlichen CAN-Teilnehmerstation und überträgt Nachrichten 5 gemäß dem CAN-Protokoll, wenn sie die Pulsformungseinrichtung 12 und die Korrektureinrichtung 13 nicht umfasst.

Fig. 2 zeigt sehr schematisch den Aufbau einer Nachricht 3, die identisch zu einer Nachricht 4 aufgebaut ist. Demzufolge hat die Nachricht 3, die auch als Rahmen bezeichnet wird, einen Rahmenkopf 31, ein Datensegment 32 und ein Rahmenende 33. Der Rahmenkopf 31 ist am Anfang der Nachricht 3, das Datensegment 32 in der Mitte und das Rahmenende 33 am Ende der Nachricht 3 angeordnet. Der Rahmenkopf 31 entspricht, bis auf, insbesondere im Wert, angepasste Markierungsbits, dem CAN-Kopf eines CAN-Rahmens, also einer Nachricht 5. Das Rahmenende 33 entspricht bis auf, insbesondere im Wert, angepasste Markierungsbits, dem CAN-Ende eines CAN-Rahmens, also einer Nachricht 5.

Für das mittlere Datensegment 32 erhöht die Pulsformungseinrichtung 12 nicht nur die Signalgeschwindigkeit, sondern die gesamte Signalstruktur ist neu definiert, um bei noch höheren Datenraten eine hohe Robustheit zu erhalten. Hierbei wird kein zusätzliches Protokoll oder ein zusätzlicher Datenkanal benötigt, sondern die Pulsformungseinrichtung 12 passt beim Erstellen einer Nachricht 3, 4 lediglich das Signalformat an. Das Signalformat ist in der Form so ausgelegt, dass es auch bei üblichen Signalstörungen z. B. durch Einstrahlung, usw., und Hardwaretoleranzen, was eine Auswirkung auf Sychronisationsanforderungen hat, eine sichere Kommunikation erlaubt und gleichzeitig die spektralen Masken hinsichtlich Abstrahlung bzw. elektromagnetischer Verträglichkeit (EMV) einhält.

Fig. 3 zeigt, dass das Datensegment 32 eine Trainingssequenz 321 und Daten 322 umfasst. Bei der in Fig. 3 gezeigten Variante ist die Trainingssequenz 321 vor den Daten 322 also am Anfang des Datensegments 32 angeordnet. Alternativ kann die Trainingssequenz 321 jedoch in der Mitte des Datensegments 32 angeordnet sein. Die Trainingssequenz 321 ermöglicht allen Teilnehmerstationen 10, 20, 30, die jeweilige Kanalcharakteristik der Busleitung 40 auf Basis des aktuell empfangenen Datenrahmens zu ermitteln. Die jeweilige Kanalcharakteristik ergibt sich daraus, dass für CAN-Bustopologien unterschiedliche Ausbreitungswege für die Signale auf der Busleitung 40 existieren. Je nach betrachteter Teilnehmerstation 10, 20, 30 als Sender und mit ihr kommunizierenden Empfänger haben diese Verbindungen unterschiedliche Impulsantworten, welche zur Signalverzerrung beitragen.

Im bisherigen CAN-System wurde diese Problematik durch möglichst lineare Leitungsstruktur mit definierter Abschlussterminierung gelöst. Weiterhin erlaubt die relativ geringe Datenrate bei CAN die Verwendung von definierten Buspegeln, welche sich nach definierter Zeit, die kleiner als die Bit- bzw. Symboldauer ist, an allen Empfangspunkten in einem eingeschwungenen Zustand befinden. Bei einer höheren Bitrate bzw. Symbolrate führen die Ausbreitungseffekte auf der Busleitung 40 zu deutlichem Übersprechen zwischen zwei aufeinanderfolgenden Übertragungssymbolen, so dass eine Signalentzerrung für hochratige Übertragung mittels der Korrektureinrichtung 13 vorgenommen wird. Aufgrund der Broadcast-Charakteristik des parallelen Busses ist ein Linkaufbau zwischen zwei Teilnehmerstationen 10, 20, 30, wie es beispielsweise bei einem mit der eingetragenen Marke BroadR-Reach® gekennzeichneten Produkt der Firma Broadcom eingesetzt wird, mit gegebenenfalls angepasster Vorverzerrung auf die Verbindung zwischen zwei Teilnehmerstationen 10, 20, 30 nicht umsetzbar.

Gemäß Fig. 4 umfasst das Datensegment 32 in den Daten 322 zusätzlich Parameter 3221, Informationsbits 3222 und die Checksumme 3223. Mit den Parametern 3221 als z. B. Zusatzparameter und der Checksumme 3223, welche gegebenenfalls vergrößert ist, kann die Integrität einer Nachricht 3 als Datenpaket zusätzlich gesichert werden. In den Informationsbits 3222 sind die Informationen enthalten, welche als Information von einer der Teilnehmerstationen 10, 20, 30 als Sender an den entsprechenden Empfänger im Bussystem 1 zu senden sind.

Bei dem vorliegenden Ausführungsbeispiel wird im mittleren Datensegment 32 eine lineare Modulation auf Basis von Puls-Amplituden-Modulation (PAM) eingesetzt. Alternativ können auch Mehrträgerverfahren, z. B. ein orthogonales Frequenzmultiplexverfahren (OFDM = Orthogonal Frequency-Division Multiplexing), usw., eingesetzt werden, jedoch besitzen diese Verfahren ungünstige Eigenschaften hinsichtlich einer leistungseffizienten und kostengünstigen Realisierung.

Beim Abbilden (Mapping) bildet die Puls-Amplituden-Modulation bei dem vorliegenden Ausführungsbeispiel die, optional kodierten und verschachtelten (interleavten), Bits auf Modulationssymbole ab. Bei 2ⁿ-PAM werden n-Tupel von Übertragungsbits auf Signalstufen abgebildet. Beispielsweise gilt für eine reelle 4-Puls-Amplituden-Modulation: +1V (00), +0.33V (01), -0.33V (11), -1V (10).

Die Sendepulsform einer Nachricht 3, 4 wird von der Pulsformungseinrichtung 12 entsprechend den spektralen Anforderungen (Masken) ausgelegt. Als Beispiel wird ein Nyquistpuls als Sendepuls betrachtet, wobei sich zur Pulsformung besonders ein Root-Raised-Cosine Filter als Sendefilter eignet. Bei dem entsprechendem Empfangsfilter beim Empfänger der Nachricht 3, 4 ergibt sich in diesem Fall ein Raised-Cosine Gesamtpuls. Durch 2-fache Überabtastung kann das Sendefilter digital dargestellt werden. Ein zusätzliches analoges Filter wird zur Bandbegrenzung (Anti-Aliasing) verwendet, was bei digitaler Vorfilterung deutlich einfacher ausgelegt werden kann.

Beispiel: 40MHz Abtastrate (2-fach Überabtastung) und Roll-off Faktor 0.5 ergibt 15MHz Bandbreite bei einer Symbolrate von 20MHz. Für eine 4- Puls-Amplituden-Modulation (4-PAM) wird eine Roh-Bitrate von 40MBit/s erzielt.

Auf der anderen Seite des Übertragungswegs ist die Korrektureinrichtung 13 für den Empfang der Nachricht 3, 5 vorgesehen. Die Korrektureinrichtung 13 führt im Fall eines Empfangs einer Nachricht 3, 5 folgende Schritte durch:
- Pegelanpassung mittels AGC (Automatic Gain Control = automatische Verstärkungssteuerung)
- Synchronisation (Timing, Abtasttakt, Anfangsmarke)
- Kanalschätzung
- Filterberechnung (Vor- und Rückwärtsfilter für DFE (Decision-Feedback Equalization = Entscheidung-Rückkopplung-Abgleich), ggf. Adaption
- Entzerrung

Die durch den verzerrenden Übertragungskanal induzierte Intersymbol Interferenz (ISI) im Empfangssignal wird durch Einsatz von Entzerrung im Empfänger bewältigt. Die notwendige Kanalzustandsinformation, z. B. in Form der Impulsantwort für die Kanalschätzung, wird auf Basis der Trainingssequenz 321 gewonnen. Im Falle von starken Taktabweichungen zwischen einer der Teilnehmerstationen 20, 30 als Sender und einer anderen der Teilnehmerstationen 20, 30 als Empfänger ist neben der Nachführung der Taktsynchronisation auch eine adaptive Nachführung der Kanalschätzung und der sich hieraus ergebenden Filterkoeffizienten durchzuführen. Im Falle eines optional eingesetzten Transformators (galvanische Trennung) resultiert ein unterdrückter Gleichanteil, welcher separat im Detektor nachgeführt werden kann.

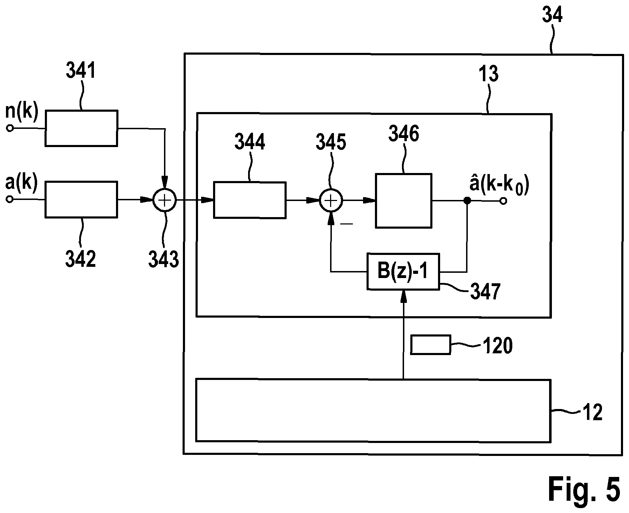

Fig. 5 zeigt den Aufbau der Pulsformungseinrichtung 12 und der Korrektureinrichtung 13 der Sende-/Empfangseinrichtung 34. Die Korrektureinrichtung 13 ist anstelle eines Komparators einer herkömmlichen CAN-Sende-/Empfangseinrichtung bzw. eines CAN-Transceivers eingesetzt. Hierbei bildet die Korrektureinrichtung 13 beispielsweise eine Decision-Feedback Equalization Struktur, die nachfolgend auch DFE-Struktur genannt wird, wie in Fig. 5 gezeigt. Die zur Korrektur benötigte Kanalimpulsantwort 120, die durch ein Signal b(k) dargestellt werden kann, ist in der Trainingssequenz 321 (Fig. 3) umfasst.

Fig. 5 zeigt den prinzipiellen Aufbau einer DFE-Struktur mit vorgeschaltetem Kanalmodell. Die Störung auf dem Kanal oder der Busleitung 40 wird durch ein Signal n(k) und ein Filter 341 mit der Übertragungsfunktion G(z) dargestellt, die der z-Transformierten der zeitdiskreten Folge g(k) entspricht. Das Empfangssignal an den Teilnehmerstationen 10, 20, 30 ergibt sich aus einem Sendesignal a(k) nach Durchlaufen eines Kanals, welcher durch ein Filter 342 mit der Übertragungsfunktion H(z) modelliert ist. Bei dem Punkt 343 werden die sich ergebenden Signale addiert und danach einem Filter 344 zugeführt. Das Filter 344 empfängt also an seinem Eingang das von der Teilnehmerstation 30 empfangene Signal. Das Filter 344 ist ein mögliches zusätzliches Filter in der Sende-/Empfangseinrichtung 34 mit einer Übertragungsfunktion F(z). Das Filter 344 kann zur Konzentration der Signalenergie genutzt werden, kann jedoch zur vereinfachten Betrachtung mit konstanter Übertragungsfunktion, wie beispielsweise F(z) = 1, angenommen werden. Anschließend wird dem von dem Filter 344 ausgegebenen Signal bei dem Punkt 345 die modellierte Störung abgezogen. Die normierte Kanalimpulsantwort 120 wird als resultierender Gesamtkanal zusammengesetzt aus dem mit dem Filter 342 modulierten Kanal und der Ausgabe des Filters 344. Der laufzeitkompensierte Gesamtkanal wird durch B(z), der z-Transformierten von b(k), in Fig. 5 dargestellt. Der Wert an der Stelle k=0 repräsentiert den zur Entscheidung betrachteten Haupttap und die folgenden Werte an den Stellen k>0 entsprechen den Taps vorangehender Symbole bzw. Bits. Für die Koeffizienten b(k) der Kanalimpulsantwort 120 gilt b(k) = 0, so dass der Haupttap des Filters 347 eliminiert wird, was durch den Term -1 des durch B(z)-1 gegebenen Filters 347 dargestellt wird. Der Haupttap hat beispielsweise den Wert 1. Das aus der Kompensation durch das Korrektursignal nach der Additionsstufe 345 resultierende Signal â(k-k₀) wird dann auf einen Entscheider 346 gegeben, welcher dem Komparator einer herkömmlichen CAN-Sende-/Empfangseinrichtung bzw. eines CAN-Transceivers entspricht. Anschließend steht das von der Korrektureinrichtung 13 korrigierte Empfangssignal zur Weiterverarbeitung für die Kommunikationssteuereinrichtung 11 oder 21 zur Verfügung. In Fig. 5 stellt der Term k₀ eine Entscheidungsverzögerung, mit Verzögerung k₀ des gefilterten Signals nach dem Filter 344, dar, die mit dem Filter 344 mit der Übertragungsfunktion F(z) optimiert werden kann und der vereinfachten Betrachtung hier mit k₀ = 0 angenommen wird.

Beispielsweise gilt:
- Beispielkanalimpulsantwort h(k) = δ(k) + 0,5 δ (k-1) + 0,2 δ (k-2)
- Vorfilterimpulsantwort f(k) = δ(k) => F(z) = konstant
- Entscheidungsverzögerung k₀ = 0

Für diesen Fall ist b(k) = h(k) eine sinnvolle Lösung, und B(z)-1 entspricht der Kanalimpulsantwort b(k) - δ(k) = h(k) - δ(k) = 0,5 δ(k-1) + 0,2 δ(k-2). Hierin lässt sich leicht erkennen, dass nur bereits entschiedene und bekannte Symbole zur Rückkoppelung verwendet werden, da der aktuelle Entscheidungszeitpunkt k entspricht und diese Impulsantwort nur Terme bezogen auf in der Vergangenheit liegenden Empfangswerten (k-1, k-2) berücksichtigt.

Gemäß der vorangegangenen Beschreibung von Fig. 5 konfiguriert die Pulsformungseinrichtung 12 über die Kanalimpulsantwort 120 das Filter 347. Es ist möglich und für die Erhöhung der Qualität der Korrektur durch die Korrektureinrichtung 13 noch vorteilhafter, auch das Filter 344 mit einer entsprechenden Kanalimpulsantwort zu konfigurieren, die sich gegebenenfalls von der Kanalimpulsantwort 120 unterscheidet. Die Konfiguration des Filters 344 mit der entsprechenden Kanalimpulsantwort wird in gleicher Form wie die zuvor beschriebene Konfiguration des Filters 347 durchgeführt.

Auch wenn die Pulsformungseinrichtung 12 und die Korrektureinrichtung 13 in der Sende-/Empfangseinrichtung 34 sehr einfach realisiert werden können, ist auch ihre Realisierung in der Kommunikationssteuereinrichtung 11 umsetzbar, wie durch die Kommunikationssteuereinrichtung 21 der Teilnehmerstation 20 gezeigt.

Das Verfahren gemäß dem vorliegenden Ausführungsbeispiel beobachtet das CAN-Bussignal während der Übertragung und korrigiert das Signal mit Hilfe der oben dargestellten DFE-Struktur. Hierbei ist die Kenntnis der Kanalimpulsantwort von Vorteil, welche von der Paarung Sender und Empfänger abhängig ist, wie zuvor beschrieben. Die Impulsantwort wird auf Basis der Trainingssequenz 321 im Empfänger einer Nachricht 3, 4 geschätzt. Eine Verzögerung des Signals der Nachricht 3, 4 ist prinzipiell nicht gegeben, kann aber zu weiteren Optimierungsmaßnahmen, insbesondere einer Filteroptimierung, genutzt werden.

Somit ist ein neues Konzept für den Physical Layer betrachtet und eine Teilnehmerstation und ein Verfahren zur Umsetzung dargestellt, um das CAN-Bussystem zu höheren Geschwindigkeiten über CAN-FD hinaus, insbesondere für den Datenratenbereich zwischen 5 - 100 MBit/s, weiterzuentwickeln. Um eine Kompatibilität zu existierenden CAN-Teilnehmerstationen 10, nach erweiterter Spezifikation für die Koexistenz, und einen Migrationspfad des CAN-Systems zu erreichen, sind die Strukturen des CAN-Bussignals besonders im Kopf und am Endes eines CAN-Rahmens, wie der Nachricht 5, beibehalten und durch eine komplexere Übertragungsform im mittleren Segment des CAN-Rahmens ergänzt, um eine hohe Netto-Datenrate zu erhalten. Besonders wird durch die (optionale) Nutzung einer höheren Anzahl an Nutzdaten im Datensegment 32 eine sehr hohe maximale Datenrate ermöglicht. Der beschriebene Einsatz hochstufiger Modulation im Datensegment von CAN stellt eine mögliche Technik dar. Diese Modulation kann auf Basis von bekannten Verfahren wie z. B. Pulsamplitudenmodulation (PAM) und Mehrträgermodulation (Orthogonal Frequency-Division Multiplexing (OFDM)) - auch in Kombination verschiedener Verfahren - aufgebaut werden und neben einem Basisband auch höhere Frequenzbereiche nutzen. Durch entsprechende Auslegung des Frontends, also des Rahmenkopfs 31, wird die Arbitrierung in der bisherigen von CAN bekannten Form durchgeführt, wobei eine Planung von CAN-IDs in bisheriger Form vorgenommen wird. Für den hochratigen Teil im mittleren Segment eines Rahmens, dem Datensegment 32, werden die Nachrichten 3, 4 in Form von Signalen mit konstanter Impedanz der Sendeausgangsstufe auf das Bussystem 1 eingekoppelt. Aufgrund der möglichen Reflexionen auf der Busleitung 40 sind im Empfänger Verfahren für die Signalentzerrung vorgesehen, die von der Korrektureinrichtung 13 ausgeführt werden, und in der Auslegung des Rahmenformates berücksichtigt.

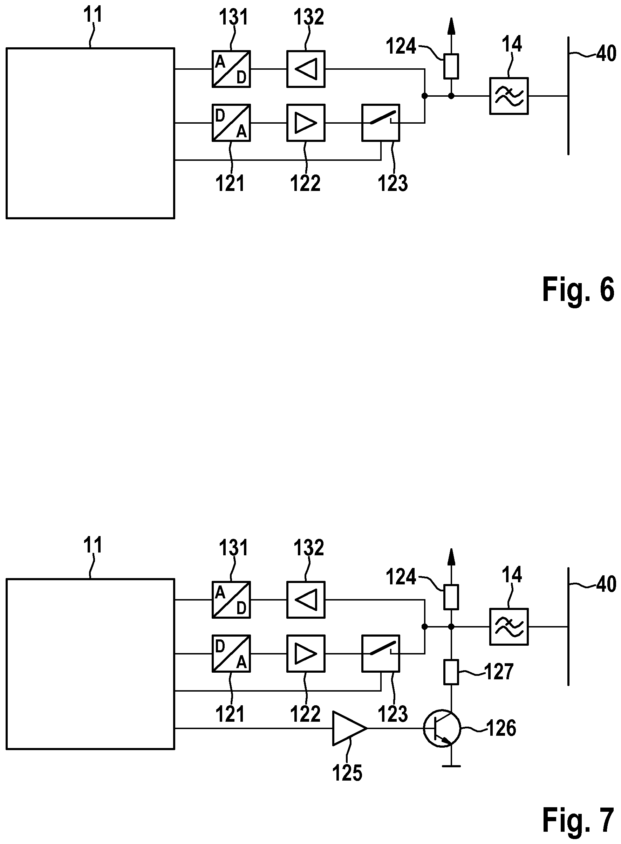

Fig. 6 zeigt ein zweites Ausführungsbeispiel für eine Hardwareausführung der Pulsformungseinrichtung 12 und der Korrektureinrichtung 13. Demgemäß sind für eine Hardwareausführung der Pulsformungseinrichtung 12 und der Korrektureinrichtung 13 Kombinationen aus einem bisherigen CAN-Transceiver 14, der an die Busleitung 40 angeschlossen ist, und zusätzlichen Analog-/Digital- und Digital-/Analog-Wandlern 131, 121 möglich. In Fig. 6 ist als Beispiel eine unsymmetrische Darstellung für die interne Widerstandsbeschaltung mit einem Pull-Up Widerstand 124 wiedergeben.

Gemäß Fig. 6 wird der Empfangsteil, also die Korrektureinrichtung 13, über den A/D-Wandler 131 mit einsprechender Nachverarbeitung 132 ausgeführt. Der Sendeteil, also die Pulsformungseinrichtung 12 (Fig. 1), wird über den D/A-Wandler 121 mit nachgeschaltetem Verstärker 122 realisiert, wobei sich der D/A-Wandler 121 über einen Schalter 123 hochohmig (ab-)schalten lässt. Hierdurch kann eine Einkopplung rezessiver Zustände über den Widerstand 124 erfolgen.

Fig. 7 zeigt ein drittes Ausführungsbeispiel für eine Hardwareausführung der Pulsformungseinrichtung 12 (Fig. 1) und der Korrektureinrichtung 13 (Fig. 1). Hierbei findet, zusätzlich zu den in Fig. 6 gezeigten Elementen, in der Pulsformungseinrichtung 12 für die Repräsentation dominanter Zustände in den Nachrichten 3, 4 ein Pull-Down-Transistor oder ein herkömmlicher Transceiver Verwendung. Demzufolge ist der untere Schaltungsteil in Fig. 7 mit einem Puffer 125, einem Pull-Down Transistor 126 und einem Widerstand 127 dargestellt, mit welchen die Repräsentation dominanter Zustände in den Nachrichten 3, 4 erfolgt.

Gemäß einem vierten Ausführungsbeispiel umfasst die Pulsformungseinrichtung 12, anstelle der Elemente 121, 122, 123, 124, nur den unteren Schaltungsteil von Fig. 7 für die Repräsentation dominanter Zustände in den Nachrichten 3, 4. Somit findet gemäß diesem Ausführungsbeispiel keine Einkopplung von rezessiven Zuständen auf die Busleitung 40 statt.

Alle zuvor beschriebenen Ausgestaltungen des Bussystems 1, der Teilnehmerstationen 10, 20,30 und des Verfahrens können einzeln oder in allen möglichen Kombinationen Verwendung finden. Zusätzlich sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1, 2 zumindest für bestimmte Zeitspannen ein exklusiver, kollisionsfreier Zugriff einer Teilnehmerstation 10, 20, 30, 50, 60 auf einen gemeinsamen Kanal gewährleistet ist.

Das Bussystem 1, 2 gemäß den Ausführungsbeispielen ist insbesondere ein CAN-Netzwerk oder ein TTCAN-Netzwerk oder ein CAN FD-Netzwerk.

Die Anzahl und Anordnung der Teilnehmerstationen 10, 20, 30 in dem Bussystem 1 der Ausführungsbeispiele ist beliebig. Insbesondere können auch nur Teilnehmerstationen 10 oder Teilnehmerstationen 20 oder Teilnehmerstationen 30 in dem Bussystem 1 der Ausführungsbeispiele vorhanden sein. Die Teilnehmerstationen 10, 20, 30 müssen auch nicht sowohl eine Pulsformungseinrichtung 12 als auch eine Korrektureinrichtung 13 aufweisen. Die Teilnehmerstationen 10, 20, 30 können auch nur eine Pulsformungseinrichtung 12 oder eine Korrektureinrichtung 13 aufweisen.

Anstelle der bei dem ersten Ausführungsbeispiel beschriebenen Decision-Feedback Equalization Struktur (DFE-Struktur) für die Schätzeinrichtung 12 und die Korrektureinrichtung 13 können auch beliebige Trellis-basierte Entzerrverfahren zur Anwendung kommen, wie beispielsweise der BCJR-Algorithmus (in BCJR stehen die einzelnen Buchstaben für die Initialen der Entwickler: B für L. Bahl, C für J. Cocke, J für F. Jelinek, R für J. Raviv) und/oder ein DDFSE-Algorithmus (DDFSE = Delayed Decision-Feedback Sequence Estimation).

Es sind verschiedene Einsatzgebiete der Teilnehmerstation 10, 20, 30 und des von ihr ausgeführten Verfahrens denkbar. Insbesondere ist neben dem Einsatz für CAN und CAN-FD auch eine Anwendung in FlexRay denkbar. Diese Systeme verwenden bisher keine Entzerrverfahren im Empfänger, der empfangenden Teilnehmerstation.

Das Verfahren kann für jede spezielle Anwendung, beispielsweise CAN-FD, FlexRay, usw. separat optimiert werden. Für mehrere Einsatzgebiete kann die Anwendung auch automatisch erkannt und entsprechend adaptiert werden. Beispielsweise ist das Verfahren bei CAN-FD schneller als bei CAN auszuführen, so dass keine Verzögerung entsteht, die länger als die vom jeweiligen Protokoll tolerierte ist.

Zur Übertragung auf dem Kanal der Busleitung 40 stehen mehrere Übertragungsformate zur Verfügung. Generell kann die Übertragung im Basisband erfolgen, so dass die Abtastwerte direkt vom Digital-/Analog-Wandler 121 über den Verstärker 122 auf die Busleitung 40 eingekoppelt werden.

Neben der digitalen Pulsformung im Sender bzw. in der Pulsformungseinrichtung 12 und Signalfilterung im Empfänger bzw. der Korrektureinrichtung 13 können auch analoge Filterstufen eingesetzt werden.

Alternativ zur Basisbandübertragung kann eine trägerbasierte Übertragung eingesetzt werden, bei der die QAM-Modulationssymbole auf eine Trägerfrequenz aufmoduliert werden. Eine Modulation der Trägerfrequenz ist bei Einsatz von Überabtastung auch im digitalen Bereich möglich. Die Übertragung im Basisband ist die bevorzugte Realisation, da der Übertragungskanal im niedrigen Frequenzbereich die besten Eigenschaften, beispielsweise die größte Kapazität, besitzt. Für eine Modulation im Basisband werden reellwertige Modulationssymbole (z. B. 2-, 4-, 8-, 16- PAM) verwendet.

Bei einem Kanal mit wenig Verzerrung, resultierend aus den Leitungseigenschaften, kann statt einer kohärenten Übertragung, die eine Frequenz- und Phasensynchronisation sowie eine Kanalschätzung erfordert, eine inkohärente Übertragung eingesetzt werden, die allerdings deutlich schlechtere Leistungseffizienz besitzt.

Neben der zuvor genannten Puls Amplituden Modulation (PAM) kann ein Orthogonal Frequency-Division Multiplexing (OFDM) als mögliche Auslegung genutzt werden. Hierfür werden die zu übertragenen Daten auf Symbole mehrere Träger abgebildet (gemapped) und den einzelnen Frequenzen eines OFMS Symbols zugeordnet. Zur Generierung des Sendesignals werden die Symbole eines OFDM-Symbols mittels inverser Fouriertransformation (IFFT) in den Zeitbereich transformiert und die entstehende Sequenz mit einer zyklischen Erweiterung versehen. Ein zusätzliches Beobachtungsintervall (Guardintervall) sollte von der Länge so ausgelegt werden, dass die entstehende Sequenz die Länge der Intersymbol-Interferenz (ISI) des Übertragungskanals umfasst. Typischerweise ist die Länge eine Zeitdauer von 0,2 bis 0,8 µs. Für die OFDM wird zur Kanalschätzung eine Trainingssequenz 321 eingesetzt. Im OFDM Signal werden weiterhin nicht alle Unterträger belegt, so dass zur Vermeidung von Überfaltungseffekten die Bandgrenzen ausgespart werden. Zusätzlich werden im OFDM Signal einzelne Unterträger mit Trainingssymbolen versehen werden, um die Synchronisation zu ermöglichen.

Als Grundlage für die Pegelanpassung und Synchronisation der Nachrichten 3, 4 wird ein Teil der Trainingssequenz 321 eingesetzt.

Für die Kanalschätzung ist eine Trainingssequenz 321 mit bestimmter Länge, wie beispielsweise 63 Symbole, einsetzbar. Hierzu kann eine Trainingssequenz 321 aus den Gold-Codes ausgewählt werden, die besonders gute Autokorrelationseigenschaften aufweisen.

Eine Basis für das Verfahren ist die Bestimmung der Kanalimpulsantwort 120, welche zur Entzerrung verwendet wird. Diese lässt sich durch Schätzung der Kanalimpulsantwort 120 des Übertragungskanals der Busleitung 40 auf Basis der Trainingssequenz 321 gewinnen. Alternativ kann auch die Kanalimpulsantwort 120 in Form des Signals b(k) direkt bestimmt bzw. optimiert werden. Die Schätzung der Kanalimpulsantworten 120 können mit allen geeigneten Verfahren durchgeführt werden. Zur Ergänzung der auf Basis der Trainingssequenz 321 durchgeführten Kanalschätzung können auch adaptive Verfahren zum Einsatz kommen, wie beispielsweise ein LMS-Algorithmus (LMS = least mean squares) und/oder RLS-Algorithmus (RLS = recursive least squares filter).

Zur Stabilisierung der Schätzung und Erhöhung der Genauigkeit der Kanalimpulsantwort 120 können die Parameter und Koeffizienten vorhergehend empfangener Nachrichten 3, 4, 5 oder Pakete von Nachrichten 3, 4, 5, die auch Empfangsbursts genannt werden können, den Nachrichten-Identifizierern oder den sendenden Teilnehmerstationen zugeordnet werden und für zeitlich folgend empfangenen Nachrichten 3, 4, 5 oder Pakete von Nachrichten 3, 4, 5, genutzt werden.

In den Teilnehmerstationen 10, 20, 30 in ihrer Funktion als Empfänger kann der Takt entweder durch Taktsynchronisation nachgeführt werden oder durch Überabtastung und Interpolation korrigiert werden. Sofern die Timingdrift nicht kompensiert wird, muss die Kanalschätzung, einschließlich der hieraus abgeleiteten Filter, nachgeführt werden.

Da die Eigenschaften des Kanals durch starke Verzerrung sehr ungünstig sein können, wird der Einsatz von DFE mit entsprechender Vorfilterung bevorzugt. Alternativ können zur Entzerrung lineare Methoden, wie Minimum Mean-Squared Error Filter (MMSE-Filter) oder Zero-Forcing Filter (ZF-Filter) eingesetzt werden.

Anstelle der DFE lassen sich andere komplexere Entzerrungsverfahren (mit Entscheidungsverzögerung) nutzen, hierzu gehört besonders der BCJR-Algorithmus und die Delayed Decision-Feedback Sequence Estimation (DDFSE).

Zusätzlich oder alternativ zur Schätzung des Kanals bzw. seiner Kanalimpulsantwort 120 können die Filter 341, 342, 344 in der Sende-/Empfangseinrichtung 14, 34, optimiert werden. Hierzu werden die Filter 344 (Übertragungsfunktion F(z)) und 347 (Übertragungsfunktion B(z)-1) sowie die Entscheidungsverzögerung k₀ betrachtet. Zur Optimierung können verschiedene Kriterien genutzt werden, wie beispielsweise eine Maximierung des Signal-zu-Störleistung Verhältnis am Eingang des Entscheiders 346.

Alternativ werden die benötigten Filterkoeffizienten 344, 347 von der Schätzeinrichtung ohne explizite Schätzung der Kanalimpulsantwort 120 eingestellt sondern direkt aus dem von der Teilnehmerstation 10, 20, 30 empfangenen Signal bestimmt.

Der Einsatz von 2-facher Überabtastung mit DFE-Filter führt inhärent zu einem Resampling entsprechend dem Abtastraster durch den DFE-Vorwärtsfilter, welcher die gefilterten Polyphasenkomponenten kombiniert. Da sich der Takt vom Anfang des Datensegments 32 bis zum Ende des Datensegments 32 um eine bestimmte Phase verschieben kann, ist eine Nachführung bei fehlender Taktsynchronisation bevorzugt.

Der hochratige Übertragungsmode kann als zusätzliche Betriebsvariante in der Form ausgeführt, dass die einsprechende Kommunikationseinrichtung alle bisherigen CAN-Modi, wie u. a. CAN-FD, Partial Networking, etc., beherrscht.

Darüber hinaus kann der hochratige Übertragungsmode derart ausgeführt werden, dass sich dieser in Koexistenz zu bisherigen CAN-Modi, wie u. a. CAN-FD, Partial Networking, etc., betrieben werden kann.

Die Partitionierung der zuvor beschriebenen Funktionalität der Pulsformungseinrichtung 12 und der Korrektureinrichtung 13 in einer Kommunikationseinrichtung kann auch derart realisiert sein, dass die zuvor beschriebene Funktionalität auf mehrere Bausteine verteilt ist. Hierdurch kann eine möglichst ähnliche Ausführung entsprechend bisherigen CAN-Controllern und CAN-Transceivern angestrebt werden. Für die Verbindung mehrerer Bausteine sind analoge wie digitale Schnittstellen einsetzbar.

Die Teilnehmerstationen 20, 30 stellen besonders für CAN-FD und Systeme mit höheren Datenraten eine Möglichkeit dar, die Empfangsgüte von CAN-FD und dieser Systeme in den Bereich von üblichen CAN Übertragungen bei Nutzung einer deutlich höheren Datenrate anzuheben.

Das Verfahren lässt sich, in Bezug auf die Funktionalität bezüglich des Empfangssignals beispielsweise in einem Transceiver bzw. einer Sende-/Empfangseinrichtung 14, 34, in einer Kommunikationssteuereinrichtung 21, usw. umsetzen. Zusätzlich oder alternativ kann es in existierende Produkte integriert werden, wie mit der Teilnehmerstation 10 veranschaulicht.

## Patentansprüche

1. Teilnehmerstation (20; 30) für ein Bussystem (1), mit
einer Pulsformungseinrichtung (12) zur Pulsformung einer Nachricht (3, 4) derart, dass die Nachricht (3, 4) eine Trainingssequenz (321) umfasst, welche Informationen zur Bestimmung der Kanalcharakteristik zwischen der Teilnehmerstation (20; 30) und einer weiteren Teilnehmerstation (10, 30; 10, 20) des Bussystems (1) umfasst, an welche die Nachricht (3, 4) zu senden ist, und/oder
einer Korrektureinrichtung (13) zur Korrektur eines von der Teilnehmerstation (10; 50; 60) empfangenen Signals auf der Grundlage einer Trainingssequenz (321), welche in einer von einer Pulsformungseinrichtung (12) der weiteren Teilnehmerstation (10, 30; 10, 20) geformten Nachricht (5, 4; 5, 3) umfasst ist,
wobei die Pulsformungseinrichtung (12) derart ausgestaltet ist, dass sie die Nachricht derart formt, dass die Trainingssequenz (321) in einem Datensegment (32) angeordnet ist, welches mit einer höheren Datenrate übertragen wird, als gemäß dem CAN-Protokoll vorgesehen, und welches nach einem Rahmenkopf (31) und vor einem Rahmenende (33) der Nachricht (3; 4) angeordnet ist,
wobei der Rahmenkopf (31) gemäß dem CAN-Protokoll gebildet ist und eine Arbitrierung in der von CAN bekannten Form durchgeführt wird,
wobei das Rahmenende (33) gemäß dem CAN-Protokoll gebildet wird,
wobei die Korrektureinrichtung (13) eine Kanalschätzung basierend auf der empfangenen Trainingssequenz (321) durchführt,
wobei die Korrektureinrichtung (13) die Kanalschätzung zur Entzerrung oder Korrektur des von der Teilnehmerstation (10; 50; 60) empfangenen Signals verwendet.

2. Teilnehmerstation (20; 30) nach Anspruch 1,
wobei im Datensegment (32) die Nachrichten (3, 4) in Form von Signalen hoher Datenrate mit konstanter Impedanz der Sendeausgangsstufe auf das Bussystem (1) eingekoppelt werden.

3. Teilnehmerstation (20; 30) nach Anspruch 1 oder 2,
wobei die Pulsformungseinrichtung (12) derart ausgestaltet ist, dass sie die Trainingssequenz (321) am Anfang oder in der Mitte des Datensegments (32) anordnet, das zwischen dem Rahmenkopf (31) und dem Rahmenende (33) der Nachricht (3; 4) angeordnet ist.

4. Teilnehmerstation (20; 30) nach Anspruch 3, wobei die Pulsformungseinrichtung (12) derart ausgestaltet ist, dass das Datensegment (32) zudem Parameter (3321), Informationsbits (3222) und eine Checksumme (3323) in dieser Reihenfolge umfasst, wobei die Informationsbits (3222) Informationen umfassen, welche von der Teilnehmerstation (20; 30) als Sender an die weitere Teilnehmerstation (10, 30; 10, 20) als Empfänger zu senden sind.

5. Teilnehmerstation (20; 30) nach einem der vorangehenden Ansprüche, wobei die Korrektureinrichtung (13) zudem zur Korrektur des von der Teilnehmerstation (10; 30; 50; 60) empfangenen Signals gemäß einem DFE-Algorithmus oder einem BCJR-Algorithmus oder einem DDFSE-Algorithmus zur Signalentzerrung ausgestaltet ist.

6. Teilnehmerstation (20; 30) nach einem der vorangehenden Ansprüche,
wobei die Korrektureinrichtung (13) einen Analog-/DigitalWandler (131) umfasst, der mit einem herkömmlichen CAN-Transceiver kombiniert ist, und
wobei die Pulsformungseinrichtung (12) einen Digital-/AnalogWandler mit nachgeschaltetem Schalter (123) zum Einkoppeln von rezessiven Zuständen auf die Busleitung (40) umfasst, und/oder
wobei die Pulsformungseinrichtung (12) einen Pull-Down-Transistor (125) oder einen Transceiver zum Einkoppeln von dominanten Zuständen auf die Busleitung (40) umfasst.

7. Teilnehmerstation (20; 30) nach einem der vorangehenden Ansprüche, zudem mit
einer Sende-/Empfangseinrichtung (14; 34) zum direkten Anschluss an eine Busleitung (40) des Bussystems (1), und
einer Kommunikationssteuereinrichtung (21; 11) zum Verarbeiten der von der Sende-/Empfangseinrichtung (14; 34) empfangenen Signale und zum Bereitstellen der von ihr zu sendenden Nachrichten (4; 3) in Form von Signalen,
wobei die Pulsformungseinrichtung (12) und/oder die Korrektureinrichtung (13) Teil der Sende-/Empfangseinrichtung (34) oder der Kommunikationssteuereinrichtung (21) sind.

8. Verfahren zur breitbandigen CAN-Kommunikation, mit den Schritten
Pulsformen, mit einer Pulsformungseinrichtung (12), einer Nachricht (3, 4) derart, dass die Nachricht (3, 4) eine Trainingssequenz (321) umfasst, welche Informationen zur Bestimmung der Kanalcharakteristik zwischen der Teilnehmerstation (20; 30) und einer weiteren Teilnehmerstation (10, 30; 10, 20) des Bussystems (1) umfasst, an welche die Nachricht (3, 4) zu senden ist,
wobei die Trainingssequenz (321) in einem Datensegment (32) angeordnet ist, welches mit einer höheren Datenrate übertragen wird, als gemäß dem CAN-Protokoll vorgesehen, und welches nach einem Rahmenkopf (31) und vor einem Rahmenende (33) der Nachricht (3; 4) angeordnet ist,
wobei der Rahmenkopf (31) gemäß dem CAN-Protokoll gebildet ist und eine Arbitrierung in der von CAN bekannten Form durchgeführt wird,
wobei das Rahmenende (33) gemäß dem CAN-Protokoll gebildet wird,
Kanalschätzung, mit einer Korrektureinrichtung (13), basierend auf der empfangenen Trainingssequenz (321),
Korrigieren, mit einer Korrektureinrichtung (13), eines von der Teilnehmerstation (10; 50; 60) empfangenen Signals auf der Grundlage der empfangenen Trainingssequenz (321), welche in der von der Pulsformungseinrichtung (12) geformten Nachricht (5, 4; 5, 3) umfasst ist,
wobei die Korrektureinrichtung (13) die Kanalschätzung zur Entzerrung oder Korrektur des von der Teilnehmerstation (10; 50; 60) empfangenen Signals verwendet.

## Claims

1. Subscriber station (20; 30) for a bus system (1), having
a pulse shaping device (12) for pulse shaping a message (3, 4) such that the message (3, 4) comprises a training sequence (321) that comprises information for determining the channel characteristic between the subscriber station (20; 30) and a further subscriber station (10, 30; 10, 20) of the bus system (1), to which further subscriber station the message (3, 4) is to be sent,
and/or
a correction device (13) for correcting a signal received by the subscriber station (10; 50; 60) on the basis of a training sequence (321) that is comprised in a message (5, 4; 5, 3) shaped by a pulse shaping device (12) of the further subscriber station (10, 30; 10, 20),
wherein the pulse shaping device (12) is configured such that it shapes the message such that the training sequence (321) is arranged in a data segment (32) that is transmitted at a higher data rate than provided for according to the CAN protocol and that is arranged after a frame header (31) and before a frame end (33) of the message (3; 4),
wherein the frame header (31) is formed according to the CAN protocol and an arbitration is performed in the form known from CAN,
wherein the frame end (33) is formed according to a CAN protocol,
wherein the correction device (13) performs a channel estimation based on the received training sequence (321),
wherein the correction device (13) uses the channel estimation to equalize or correct the signal received by the subscriber station (10; 50; 60).

2. Subscriber station (20; 30) according to Claim 1, wherein in the data segment (32) the messages (3, 4) are coupled into the bus system (1) in the form of signals having a high data rate with constant impedance of the transmission output stage.

3. Subscriber station (20; 30) according to Claim 1 or 2,
wherein the pulse shaping device (12) is configured such that it arranges the training sequence (321) at the start or in the middle of the data segment (52) arranged between the frame header (31) and the frame end (33) of the message (3; 4).

4. Subscriber station (20; 30) according to Claim 3, wherein the pulse shaping device (12) is configured such that the data segment (32) moreover comprises parameters (3321), information bits (3222) and a checksum (3323) in this order, wherein the information bits (3222) comprise information that is to be sent from the subscriber station (20; 30) as sender to the further subscriber station (10, 30; 10, 20) as receiver.

5. Subscriber station (20; 30) according to one of the preceding claims, wherein the correction device (13) is moreover configured to correct the signal received by the subscriber station (10; 30; 50; 60) according to a DFE algorithm or a BCJR algorithm or a DDFSE algorithm for signal equalization.

6. Subscriber station (20; 30) according to one of the preceding claims,
wherein the correction device (13) comprises an analogue/digital converter (131) that is combined with a conventional CAN transceiver, and
wherein the pulse shaping device (12) comprises a digital/analogue converter with a downstream switch (123) for coupling recessive states into the bus line (40), and/or
wherein the pulse shaping device (12) comprises a pull-down transistor (125) or a transceiver for coupling dominant states into the bus line (40).

7. Subscriber station (20; 30) according to one of the preceding claims,
moreover having
a transmission/reception device (14; 34) for direct connection to a bus line (40) of the bus system (1), and
a communication control device (21; 11) for processing the signals received by the transmission/reception device (14; 34) and for providing the messages (4; 3) to be sent by it in the form of signals,
wherein the pulse shaping device (12) and/or the correction device (13) are part of the transmission/reception device (34) or of the communication control device (21).

8. Method for wideband CAN communication, having the steps of
pulse shaping, using a pulse shaping device (12), a message (3, 4) such that the message (3, 4) comprises a training sequence (321) that comprises information for determining the channel characteristic between the subscriber station (20; 30) and a further subscriber station (10, 13; 10, 20) of the bus system (1), to which further subscriber station the message (3, 4) is to be sent, wherein the training sequence (321) is arranged in a data segment (32) that is transmitted at a higher data rate than provided for according to the CAN protocol and that is arranged after a frame header (31) and before a frame end (33) of the message (3; 4),
wherein the frame header (31) is formed according to the CAN protocol and an arbitration is performed in the form known from CAN,
wherein the frame end (33) is formed according to the CAN protocol,
channel estimation, using a correction device (13), based on the received training sequence (321),
correction, using a correction device (13), of a signal received by the subscriber station (10; 50; 60) on the basis of the received training sequence (321) that is comprised in the message (5, 4; 5, 3) formed by the pulse shaping device (12),
wherein the correction device (13) uses the channel estimation to equalize or correct the signal received by the subscriber station (10; 50; 60).

## Revendications

1. Station d'abonné (20 ; 30) pour un système de bus (1), comprenant
un dispositif formateur d'impulsions (12) destiné à la formation d'impulsions d'un message (3, 4) de telle sorte que le message (3, 4) comporte une séquence de formation (321), laquelle comporte des informations servant à déterminer la caractéristique de canal entre la station d'abonné (20 ; 30) et une autre station d'abonné (10, 30 ; 10, 20) du système de bus (1) à laquelle le message (3, 4) doit être envoyé, et/ou
un dispositif de correction (13) destiné à corriger un signal reçu par la station d'abonné (10 ; 50 ; 60) sur la base d'une séquence de formation (321) qui est comprise dans un message (5, 4 ; 5, 3) formé par un dispositif formateur d'impulsions (12) de l'autre station d'abonné (10, 30 ; 10, 20),
le dispositif formateur d'impulsions (12) étant configuré de telle sorte qu'il forme le message de manière à ce que la séquence de formation (321) soit disposée dans un segment de données (32) qui est transmis à un débit de données plus élevé que celui prévu selon le protocole CAN et qui est disposé après un en-tête de trame (31) et avant une fin de trame (33) du message (3 ; 4),
l'en-tête de trame (31) étant formé selon le protocole CAN et un arbitrage étant effectué sous la forme connue du CAN,
la fin de trame (33) étant formée conformément au protocole CAN,
le dispositif de correction (13) effectuant une estimation de canal en se basant sur la séquence de formation (321) reçue,
le dispositif de correction (13) utilisant l'estimation de canal pour l'égalisation ou la correction du signal reçu par la station d'abonné (10 ; 50 ; 60).

2. Station d'abonné (20 ; 30) selon la revendication 1, les messages (3, 4) étant injectés sur le système de bus (1) dans le segment de données (32) sous la forme de signaux à haut débit de données avec une impédance constante de l'étage de sortie d'émission.

3. Station d'abonné (20 ; 30) selon la revendication 1 ou 2, le dispositif formateur d'impulsions (12) étant configuré de telle sorte qu'il dispose la séquence de formation (321) au début ou au centre du segment de données (32) qui est disposé entre l'en-tête de trame (31) et la fin de trame (33) du message (3 ; 4).

4. Station d'abonné (20 ; 30) selon la revendication 3, le dispositif formateur d'impulsions (12) étant configuré de telle sorte que le segment de données (32) comporte en plus des paramètres (3321), des bits d'information (3222) et une somme de contrôle (3323) dans cet ordre, les bits d'information (3222) comprenant des informations qui sont à envoyer de la station d'abonné (20 ; 30) faisant office d'émetteur aux autres stations d'abonné (10, 30 ; 10, 20).

5. Station d'abonné (20 ; 30) selon l'une des revendications précédentes, le dispositif de correction (13) étant en outre configuré pour corriger le signal reçu par la station d'abonné (10 ; 30 ; 50 ; 60) conformément à un algorithme DFE ou un algorithme BCJR ou un algorithme DDFSE en vue de l'égalisation du signal.

6. Station d'abonné (20 ; 30) selon l'une des revendications précédentes,
le dispositif de correction (13) comportant un convertisseur analogique/numérique (131) qui est combiné avec un émetteur-récepteur CAN conventionnel et le dispositif formateur d'impulsions (12) comportant un convertisseur analogique/numérique en aval duquel est branché un commutateur (123) destiné à injecter les états récessifs sur la ligne de bus (40), et/ou
le dispositif formateur d'impulsions (12) comportant un transistor de tirage à la masse (125) ou un émetteur-récepteur destiné à injecter les états dominants sur la ligne de bus (40).

7. Station d'abonné (20 ; 30) selon l'une des revendications précédentes, comprenant en plus
un dispositif d'émission/réception (14 ; 34) destiné à être raccordé directement à une ligne de bus (40) du système de bus (1), et
un dispositif de commande de communication (21 ; 11) destiné à traiter les signaux reçus par le dispositif d'émission/réception (14 ; 34) et à mettre à disposition les messages (4 ; 3) à envoyer par lui sous la forme de signaux,
le dispositif formateur d'impulsions (12) et/ou le dispositif de correction (13) faisant partie du dispositif d'émission/réception (34) ou du dispositif de commande de communication (21).

8. Procédé de communication CAN à large bande, comprenant les étapes
formation d'impulsions, avec un dispositif formateur d'impulsions (12), d'un message (3, 4) de telle sorte que le message (3, 4) comporte une séquence de formation (321), laquelle comporte des informations servant à déterminer la caractéristique de canal entre la station d'abonné (20 ; 30) et une autre station d'abonné (10, 30 ; 10, 20) du système de bus (1) à laquelle le message (3, 4) doit être envoyé,
la séquence de formation (321) étant disposée dans un segment de données (32) qui est transmis à un débit de données plus élevé que celui prévu selon le protocole CAN et qui est disposé après un en-tête de trame (31) et avant une fin de trame (33) du message (3 ; 4),
l'en-tête de trame (31) étant formé selon le protocole CAN et un arbitrage étant effectué sous la forme connue du CAN,
la fin de trame (33) étant formée conformément au protocole CAN,
estimation du canal avec un dispositif de correction (13) en se basant sur la séquence de formation (321) reçue,
correction, avec un dispositif de correction (13), d'un signal reçu par la station d'abonné (10 ; 50 ; 60) sur la base de la séquence de formation (321) reçue qui est comprise dans le message (5, 4 ; 5, 3) formé par le dispositif formateur d'impulsions (12),
le dispositif de correction (13) utilisant l'estimation de canal pour l'égalisation ou la correction du signal reçu par la station d'abonné (10 ; 50 ; 60).
